# EUROPÄISCHE PATENTANMELDUNG

(11) **EP 3 603 864 A1**
(43) Veröffentlichungstag der Anmeldung: **05.02.2020**
(21) Anmeldenummer: 18187196.3
(22) Anmeldetag: 03.08.2018
(51) Int. Cl.: B23D 59/00, B23Q 11/00, B24B 55/10

(54) **MOBILES ABSAUGMODUL FÜR STICHSÄGE**

(71) Anmelder: Hilti Aktiengesellschaft, 9494 Schaan (LI)
(72) Erfinder: Dieing, Christoph, 88316 Isny (DE); Xu, Minghao, 201108 Shanghai (CN); Sun, Percy, 215123 Suzhou (CN); Rissmann, Thomas, 01445 Radebeul (DE)
(74) Vertreter: Hilti Aktiengesellschaft Corporate Intellectual Property

(57) **Zusammenfassung**

Staubsaugvorrichtung (6) verbindbar mit einer Werkzeugmaschine (1), wobei die Werkzeugmaschine (1) eine Werkzeugmaschinenschnittstelle (15), eine Energieversorgung (5) sowie eine Führungseinrichtung (4) mit einer Führungseinrichtungsschnittstelle (40) und wenigstens einen Lüftungskanal (9a, 9b) enthält.

Die Staubsaugvorrichtung (6) enthält eine erste und zweite Schnittstelle (50, 60) sowie einen Antrieb (21) zum Betreiben der Staubsaugvorrichtung (6), wobei die erste Schnittstelle (50) so mit der Werkzeugmaschinenschnittstelle (15) wiederlösbar verbindbar ist, dass der Antrieb (21) mit elektrischer Energie aus der elektrische Energieversorgung (5) versorgt ist, und wobei die zweite Schnittstelle (60) so mit der Führungseinrichtungsschnittstelle (40) verbindbar ist, dass die Staubsaugvorrichtung (6) mit dem wenigstens einen Lüftungskanal (9a, 9b) verbunden ist.

Werkzeugmaschine (1), zur wiederlösbaren Verbindung mit einer Staubsaugvorrichtung (6), wobei die Werkzeugmaschine (1) eine Werkzeugmaschinenschnittstelle (15), eine elektrische Energieversorgung (5) sowie eine Führungseinrichtung (4) mit einer Führungseinrichtungsschnittstelle (40) und wenigstens einen Lüftungskanal (9a, 9b) enthält.

Die Werkzeugmaschinenschnittstelle (15) ist mit einer ersten Schnittstelle (50) zur Übertragung einer elektrischen Energie von der elektrischen Energieversorgung (5) zu einem Antrieb (21) der Staubsaugvorrichtung (6) verbindbar und die Führungseinrichtungsschnittstelle (40) ist mit einer zweiten Schnittstelle (60) zur Anbindung der Staubsaugvorrichtung (6) mit dem wenigstens einen Lüftungskanal (9a, 9b) verbindbar.

## Beschreibung

Die vorliegende Erfindung betrifft eine Staubsaugvorrichtung verbindbar mit einer Werkzeugmaschine, insbesondere einer Stichsäge, wobei die Werkzeugmaschine eine Werkzeugmaschinenschnittstelle, eine elektrische Energieversorgung, beispielsweise ein Akkumulator, sowie eine Führungseinrichtung mit einer Führungseinrichtungsschnittstelle und wenigstens einen Lüftungskanal enthält.

Des Weiteren betrifft die vorliegende Erfindung eine Werkzeugmaschine, insbesondere einer Stichsäge, zur wiederlösbaren Verbindung mit einer Staubsaugvorrichtung, wobei die Werkzeugmaschine eine Werkzeugmaschinenschnittstelle, eine elektrische Energieversorgung, beispielsweise ein Akkumulator, sowie eine Führungseinrichtung mit einer Führungseinrichtungsschnittstelle und wenigstens einen Lüftungskanal enthält.

Bei der Bearbeitung eines porösen Werkstoffs mit einer Werkzeugmaschine, insbesondere einer Stichsäge, entsteht für gewöhnlich eine Menge Staub, welcher aufgewirbelt und dadurch die freie Sicht auf die Arbeitsfläche sowie allgemein die Arbeitsleistung erheblich verringern kann. Üblicherweise wird ein Staubsauger in Kombination mit der Werkzeugmaschine verwendet, um den aufgewirbelten Staub einzusaugen. Die Anbringung einer Düse sowie eines Schlauchs eines Staubsaugers an einer Werkzeugmaschine kann sich jedoch als umständlich und geradezu störend für den Anwender der Werkzeugmaschine erweisen. Für gewöhnlich sind zusätzliche Adapter und Haltevorrichtungen notwendig um die Düse an der Werkzeugmaschine zu befestigen sowie den Schlauch entsprechend führen zu können.

Aufgabe der vorliegenden Erfindung ist es das vorstehend beschriebene Problem zu lösen und eine Staubsaugvorrichtung bereitzustellen, die einfach und platzsparend an einer Werkzeugmaschine befestigt werden kann, um entsprechend Staub, welcher bei der Verwendung der Werkzeugmaschine entsteht kann, einzusaugen und zu halten. Darüber hinaus ist es Aufgabe der vorliegenden Erfindung das vorstehend beschriebene Problem durch die Bereitstellung einer Werkzeugmaschine zu lösen, welche mit einer Staubsaugvorrichtung einfach und schnell verbunden werden kann, sodass Staub, welcher bei der Verwendung der Werkzeugmaschine entsteht kann, von der Staubsaugvorrichtung eingesaugt und gehalten werden.

Die Aufgabe wird dadurch gelöst durch den Gegenstand des unabhängigen Anspruchs 1 sowie durch den Gegenstand des unabhängigen Anspruchs 5. Vorteilhafte Ausführungsformen zu dem Gegenstand des unabhängigen Anspruchs 1 finden sich in den hierzu abhängigen Unteransprüchen.

Die Aufgabe wird hierbei gelöst durch eine Staubsaugvorrichtung verbindbar mit einer Werkzeugmaschine, insbesondere einer Stichsäge, wobei die Werkzeugmaschine eine Werkzeugmaschinenschnittstelle, eine elektrische Energieversorgung, beispielsweise ein Akkumulator, sowie eine Führungseinrichtung mit einer Führungseinrichtungsschnittstelle und wenigstens einen Lüftungskanal enthält.

Erfindungsgemäß enthält die Staubsaugvorrichtung eine erste und zweite Schnittstelle sowie einen Antrieb zum Betreiben der Staubsaugvorrichtung, wobei die erste Schnittstelle so mit der Werkzeugmaschinenschnittstelle wiederlösbar verbindbar ist, dass der Antrieb mit elektrischer Energie aus der elektrische Energieversorgung versorgt ist, und wobei die zweite Schnittstelle so mit der Führungseinrichtungsschnittstelle verbindbar ist, dass die Staubsaugvorrichtung mit dem Strömungskanal verbunden ist. Hierdurch kann die Staubsaugvorrichtung einfach, schnell und platzsparend an der Werkzeugmaschine befestigt und wieder gelöst werden.

Gemäß einer vorteilhaften Ausführungsform der erfindungsgemäßen Staubsaugvorrichtung kann es möglich sein, dass die erste Schnittstelle an einem Gehäusedeckel der Staubsaugvorrichtung und die zweite Schnittstelle an einer Vorderwand der Staubsaugvorrichtung positioniert ist. Hierdurch kann die Staubsaugvorrichtung besonders platzsparend unterhalb des Gehäuses der Werkzeugmaschine und gleichzeitig entgegen der Arbeitsrichtung der Werkzeugmaschine hinter der Führungseinrichtung positioniert werden. Die Staubsaugvorrichtung ist dabei so ausgestaltet, dass diese die Gesamtlänge der Werkzeugmaschine nicht wesentlich verlängert. Die Werkzeugmaschine bleibt damit auch mit einer angeschlossenen Staubsaugvorrichtung weiterhin kompakt und leicht verwendbar.

Entsprechend einer weiteren vorteilhaften Ausführungsform der erfindungsgemäßen Staubsaugvorrichtung kann es möglich sein, dass die erste Schnittstelle der Staubsaugvorrichtung sowohl eine elektrische Kontaktierung als auch eine mechanische Kopplung enthält. Hierdurch kann platzsparend über nur eine Schnittstelle die Staubsaugvorrichtung sowohl mit elektrischer Energie zum Betreiben des Antriebs der Staubsaugvorrichtung versorgt werden als auch die Staubsaugvorrichtung mechanisch an die Werkzeugmaschine verbunden werden.

Die Aufgabe wird des Weiteren gelöst durch eine Werkzeugmaschine, insbesondere einer Stichsäge, zur wiederlösbaren Verbindung mit einer Staubsaugvorrichtung, wobei die Werkzeugmaschine eine Werkzeugmaschinenschnittstelle, eine elektrische Energieversorgung, beispielsweise ein Akkumulator, sowie eine Führungseinrichtung mit einer Führungseinrichtungsschnittstelle und wenigstens einen Strömungskanal enthält.

Erfindungsgemäß ist die Werkzeugmaschinenschnittstelle mit einer ersten Schnittstelle der Staubsaugvorrichtung zur Übertragung einer elektrischen Energie von der elektrischen Energieversorgung zu einem Antrieb der Staubsaugvorrichtung verbindbar und die Führungseinrichtungsschnittstelle ist mit einer zweiten Schnittstelle der Staubsaugvorrichtung zur Anbindung der Staubsaugvorrichtung mit dem wenigstens einen Strömungskanal verbindbar. Hierdurch kann die Werkzeugmaschine einfach und schnell mit der Staubsaugvorrichtung verbunden und auch wieder gelöst werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1a: eine Seitenansicht einer erfindungsgemäßen Werkzeugmaschine in Ausgestaltung einer Stichsäge mit einer Führungseinrichtung und verbunden mit einer erfindungsgemäßen Staubsaugvorrichtung;
- 1b: eine perspektivische Ansicht der Werkzeugmaschine mit der Führungseinrichtung und verbunden mit der Staubsaugvorrichtung;

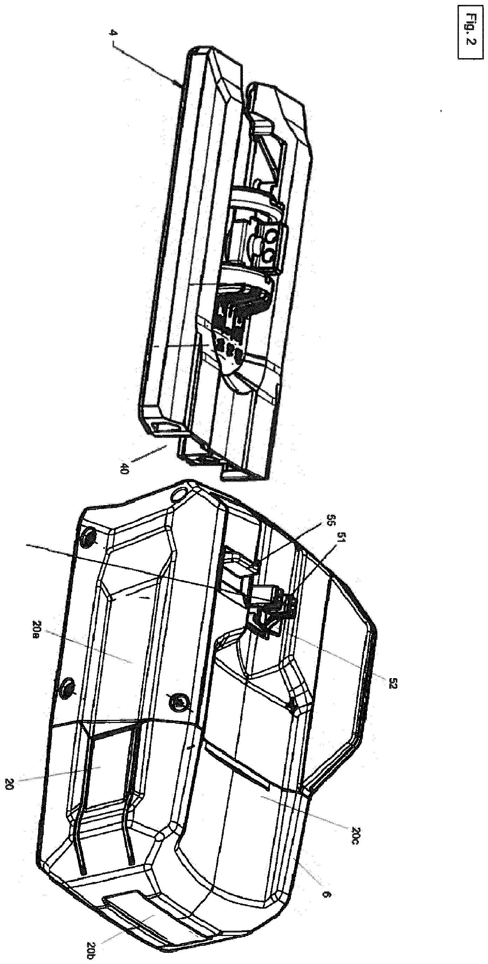

- Fig. 2: eine perspektivische Ansicht der Staubsaugvorrichtung und der Führungseinrichtung;
- Fig. 3: eine Seitenansicht der Staubsaugvorrichtung und der Führungseinrichtung;
- Fig. 4: eine seitliche Schnittansicht auf die Werkzeugmaschine mit einer Führungseinrichtung und der Staubsaugvorrichtung;
- Fig. 5: eine detaillierte seitliche Schnittansicht auf die erste und zweite Schnittstelle der Staubsaugvorrichtung;
- Fig. 6: eine perspektivische Vorderansicht auf die Staubsaugvorrichtung;
- Fig. 7: eine perspektivische Rückansicht auf die Staubsaugvorrichtung;

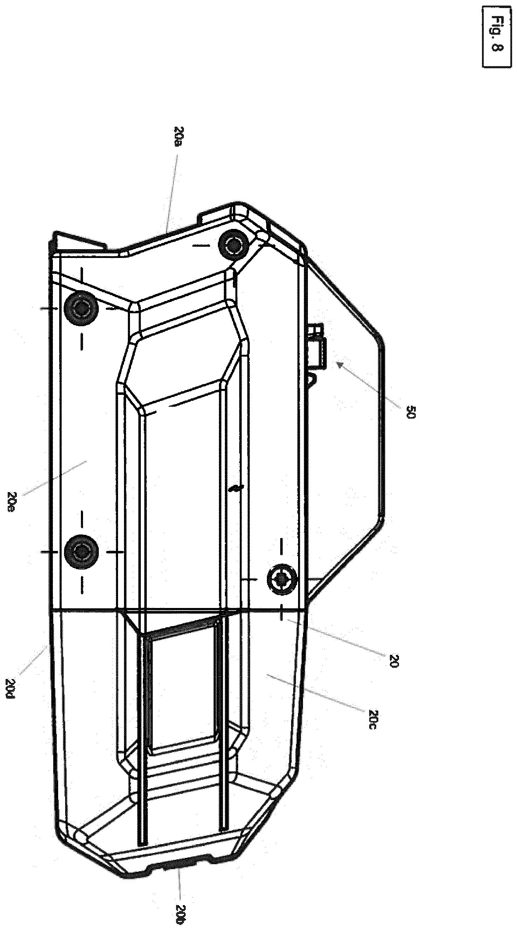

- Fig. 8: eine erste Seitenansicht auf die Staubsaugvorrichtung;

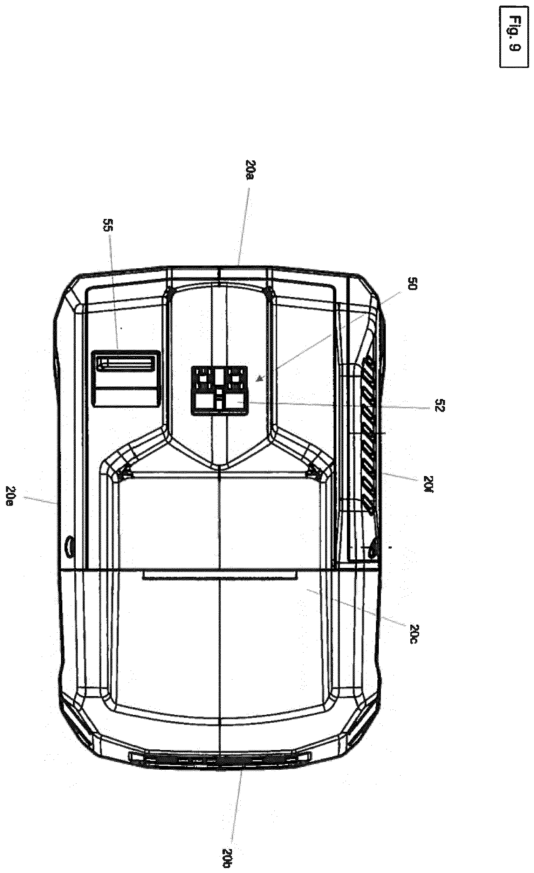

- Fig. 9: eine Draufsicht auf die Staubsaugvorrichtung;

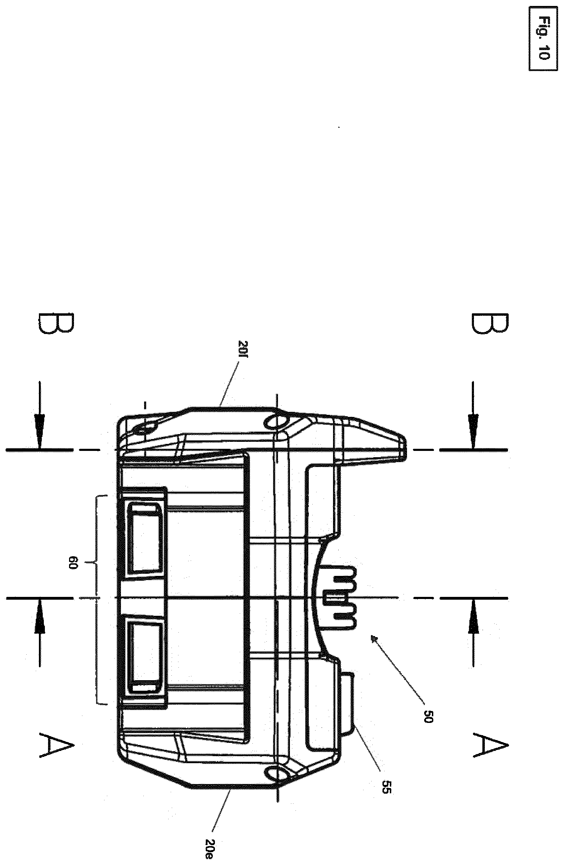

- Fig. 10: eine Vorderansicht auf die Staubsaugvorrichtung;

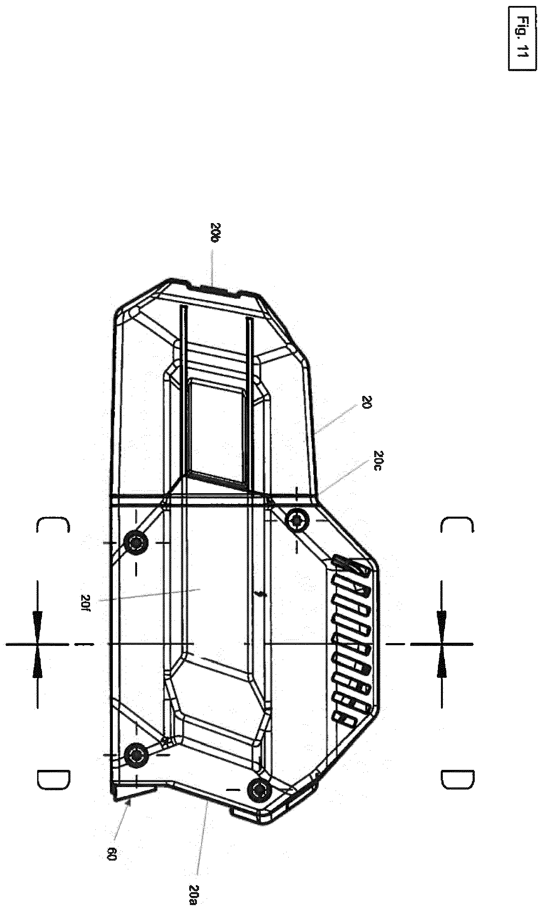

- Fig. 11: eine zweite Seitenansicht auf die Staubsaugvorrichtung;

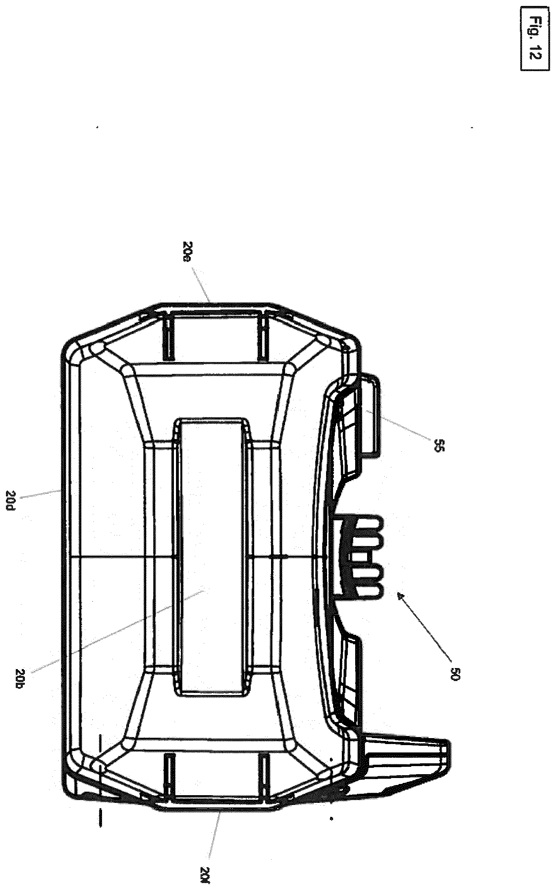

- Fig. 12: eine Rückansicht auf die Staubsaugvorrichtung;

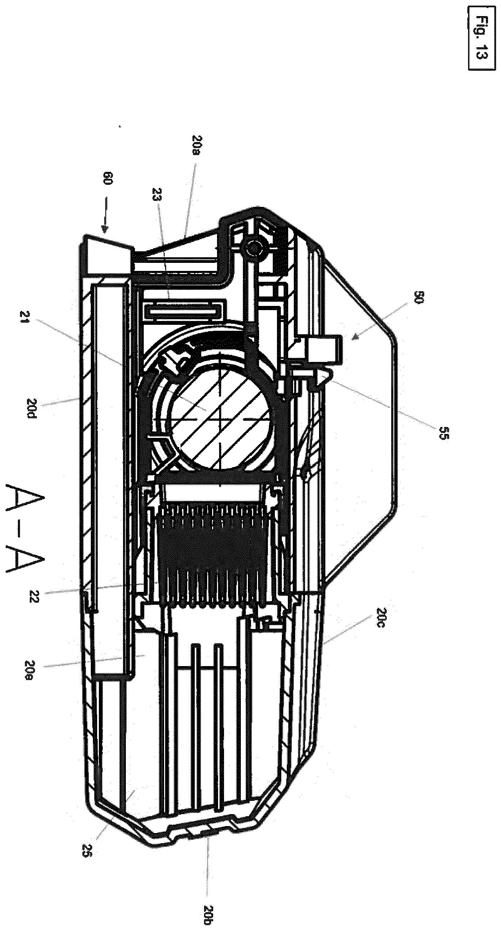

- Fig. 13: eine Schnittansicht entlang der Schnittlinie A-A aus Figur 10;

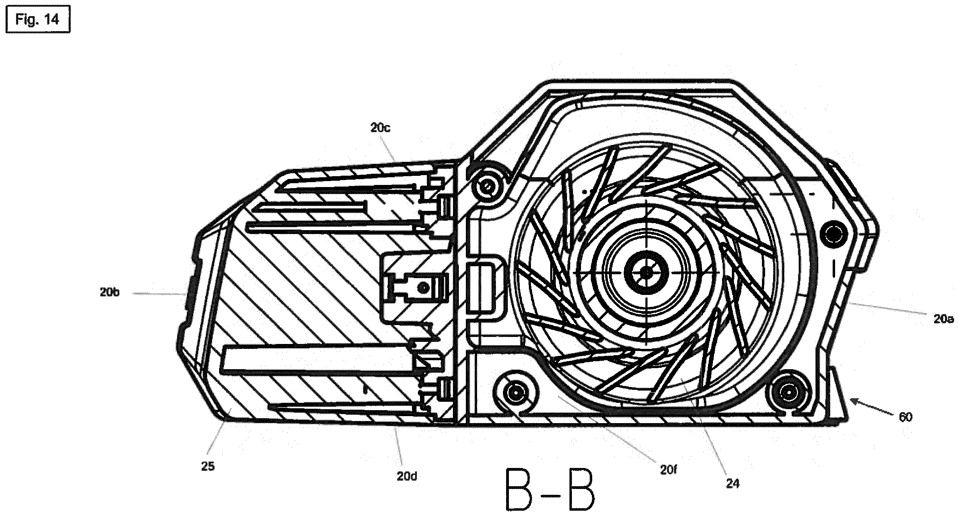

- Fig. 14: eine Schnittansicht entlang der Schnittlinie B-B aus Figur 10;

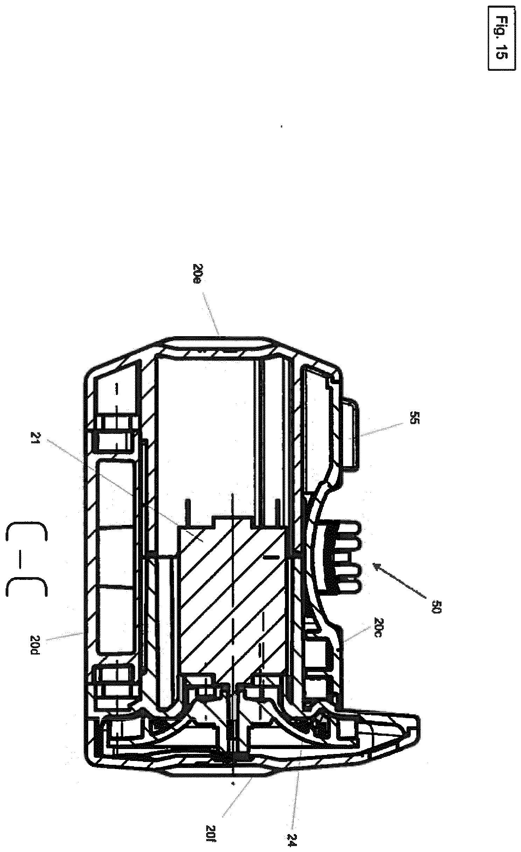

- Fig. 15: eine Schnittansicht entlang der Schnittlinie C-C aus Figur 10;

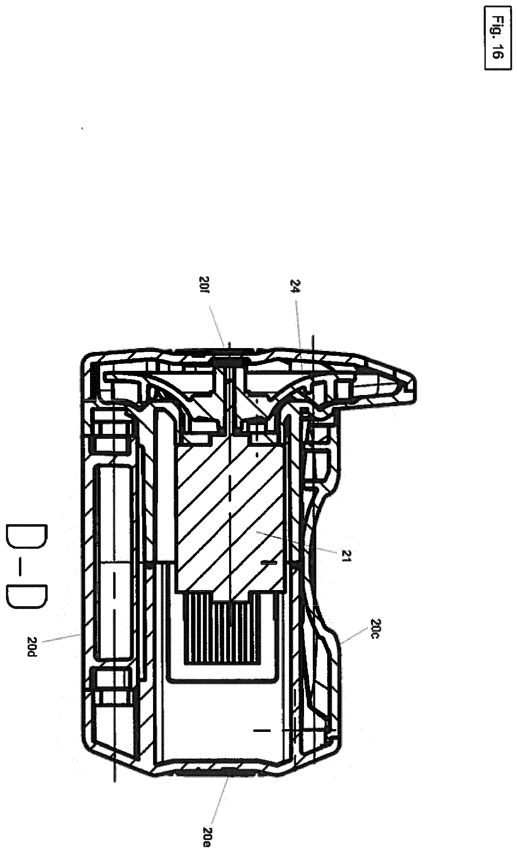

- Fig. 16: eine Schnittansicht entlang der Schnittlinie D-D aus Figur 10;
- Fig. 17: eine perspektivische Ansicht auf die Führungseinrichtung;
- Fig. 18: eine Draufsicht auf die schematisch dargestellte Führungseinrichtung;

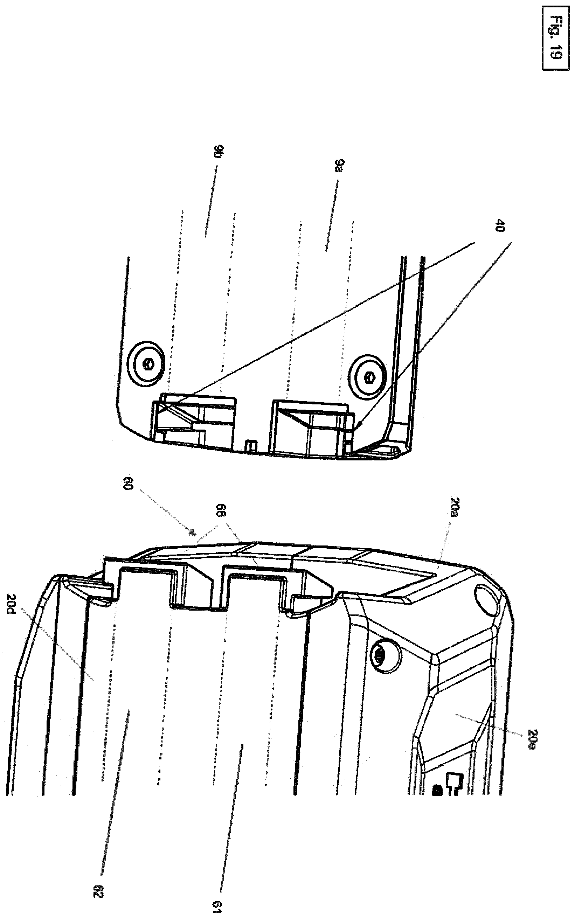

- Fig. 19: eine perspektivische Unteransicht auf die Führungseinrichtung und Staubsaugvorrichtung;
- Fig. 20: eine Explosionszeichnung der gesamten Staubsaugvorrichtung;

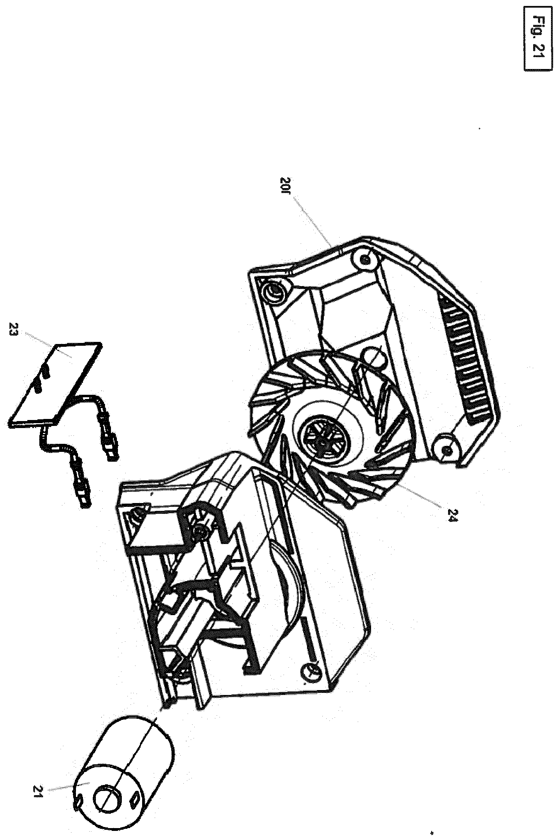

- Fig. 21: eine Explosionszeichnung der Staubsaugvorrichtung mit einem Antrieb, einem Lüftungsrad, Bestandteilen des Gehäuses und Bestandteilen der Steuerung der Staubsaugvorrichtung;
- Fig. 22: eine Explosionszeichnung der Staubsaugvorrichtung mit einem Filter, einer Filteraufnahmeeinrichtung und Bestandteilen des Gehäuses der Staubsaugvorrichtung;

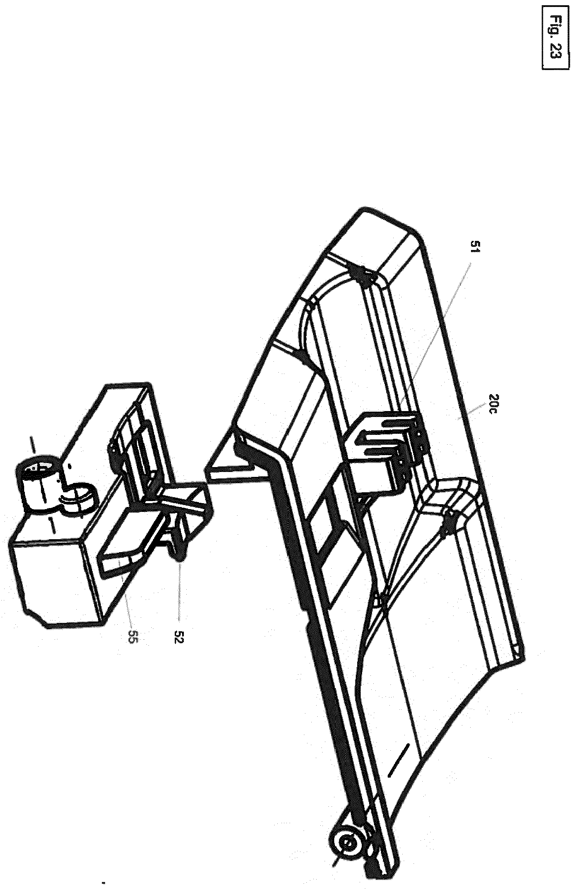

- Fig. 23: eine perspektivische Ansicht auf einen Gehäusedeckel und eine erste Schnittstelle der Staubsaugvorrichtung; und
- Fig. 24: eine perspektivische Ansicht auf einen Gehäuseboden und Bestandteile des Gehäuses der Staubsaugvorrichtung.

### Ausführungsbeispiele:

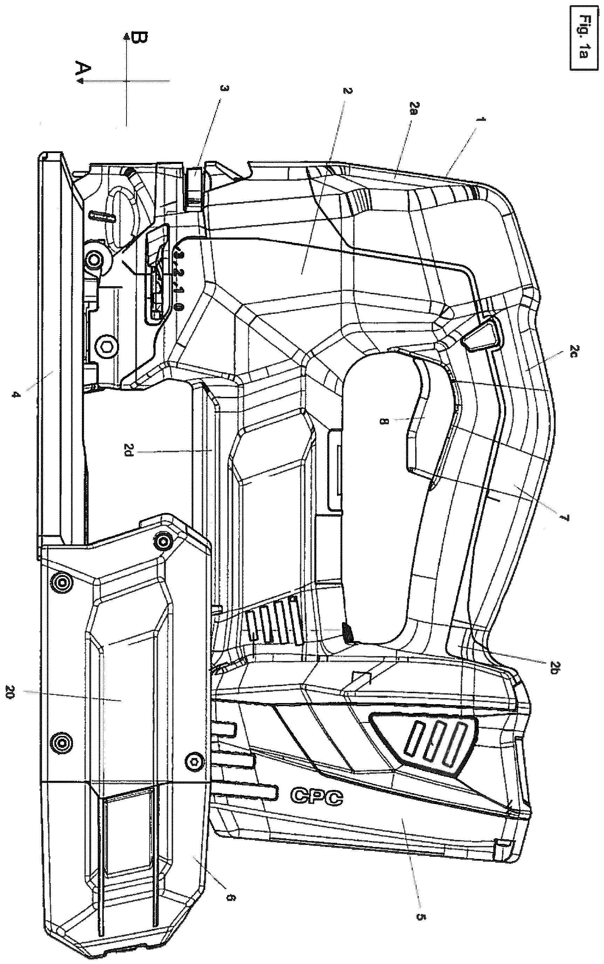

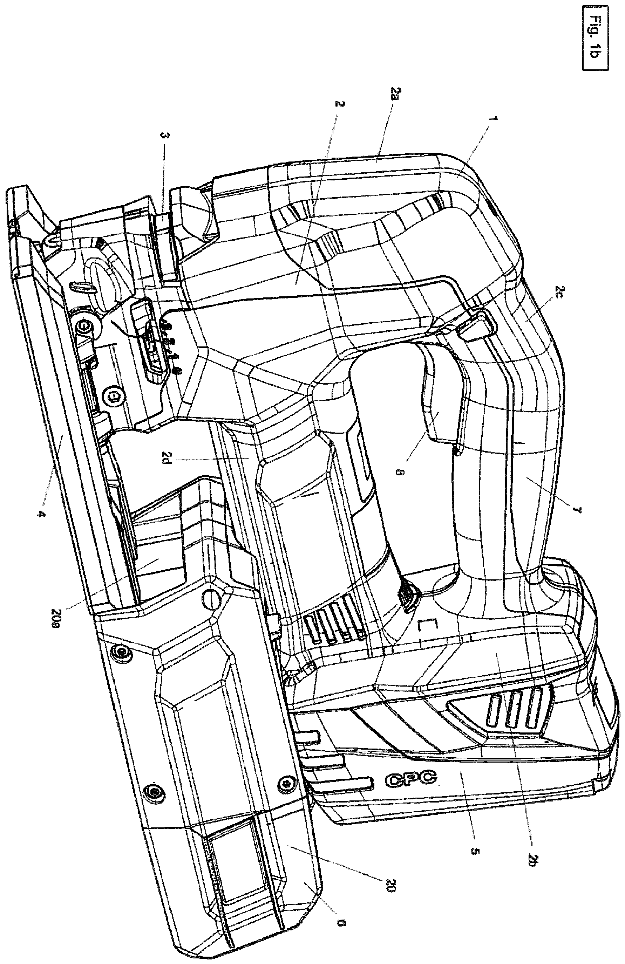

Figur 1a und 1b zeigen eine erfindungsgemäße Werkzeugmaschine 1 in beispielhafter Ausgestaltung einer Stichsäge. Es ist jedoch auch möglich, dass die Werkzeugmaschine 1 in Form einer Bohrmaschine, eines Bohrhammers, eines Schleifgeräts oder dergleichen ausgestaltet ist. Die Werkzeugmaschine 1 kann auch als Handwerkzeugmaschine bezeichnet werden.

Die insbesondere in Figur 1a und 1b dargestellte Werkzeugmaschine 1 enthält im Wesentlichen ein Gehäuse 2, eine Werkzeugaufnahme 3, eine Führungseinrichtung 4 sowie eine elektrische Energieversorgung 5. Das Gehäuse 2 enthält wiederum ein vorderes Ende 2a, ein hinteres Ende 2b, eine Oberseite 2c und eine Unterseite 2d.

Wie ebenfalls in Figur 1a und 1b gezeigt, ist die Werkzeugmaschine 1 mit einer erfindungsgemäßen Staubsaugvorrichtung 6 verbunden.

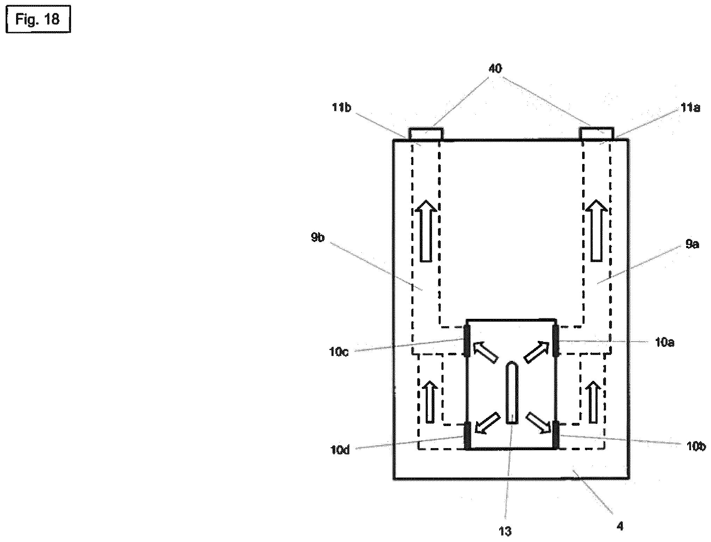

Die Werkzeugaufnahme 3 dient zur Aufnahme eines Werkzeugs 13 ist an dem vorderen Ende 2a sowie an der Unterseite 2d des Gehäuses 2 positioniert. Das Werkzeug 13 kann dabei als Sägeblatt ausgestalte sein, wenn es sich bei der Werkzeugmaschine 1 um eine Stichsäge handelt. In Figur 18 ist eine Querschnittsfläche des Werkzeugs 13 dargestellt.

An der Oberseite 2c des Gehäuses 2 ist ein Handgriff 7 mit einem Betätigungsschalter 8 vorgesehen. Mit dem Handgriff kann ein Anwender die Werkzeugmaschine 1 halten und führen. An dem hinteren Ende 2b des Gehäuses 2 ist die elektrische Energieversorgung 5 vorgesehen. In dem vorliegenden Beispiel ist die elektrische Energieversorgung 5 in Form eines Akkumulators, auch Akku genannt, ausgestaltet. Die als Akkumulator ausgestaltete Energieversorgung 5 kann mittels eines Verschlusses mit der Werkzeugmaschine 1 verbunden und auch wieder gelöst werden.

An dem vorderen Ende 2a und an der Unterseite 2d des Gehäuses 2 der Werkzeugmaschine 1 ist die Führungseinrichtung 4 positioniert. Die Führungseinrichtung 4 befindet sich dabei in Pfeilrichtung A unterhalb der Werkzeugaufnahme 3 und dient zum Führen bzw. Kontaktieren der Werkzeugmaschine 1 mit einem zu bearbeiten Werkstoff. Mit einer flachen Unterseite liegt die Führungseinrichtung 4 dabei auf der Oberfläche des Werkstoffs auf. Der zu bearbeitete Werkstoff ist beispielsweise und ist in den Figuren nicht dargestellt.

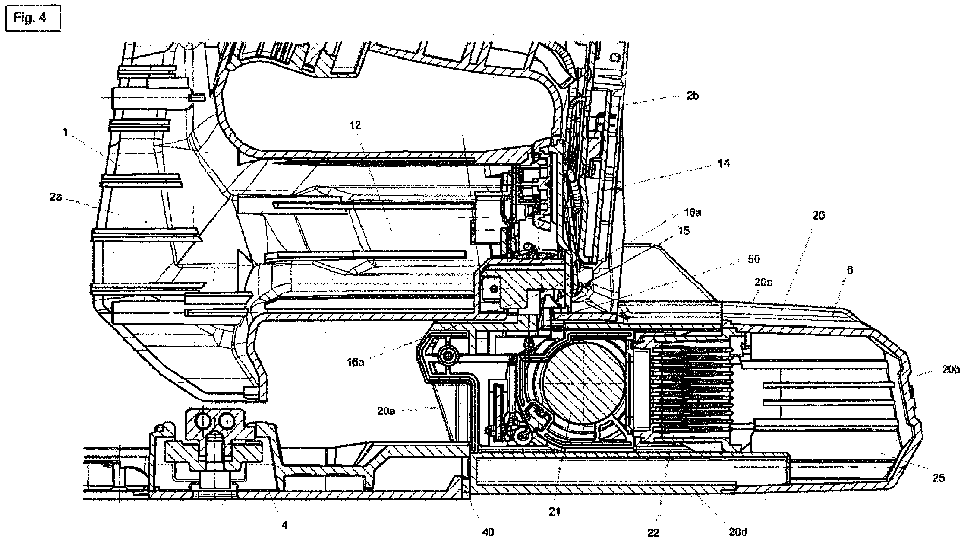

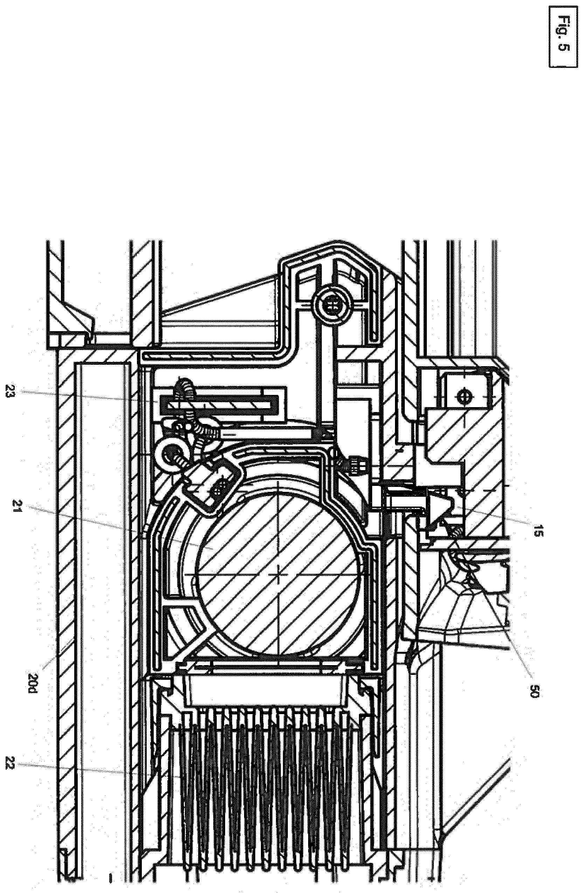

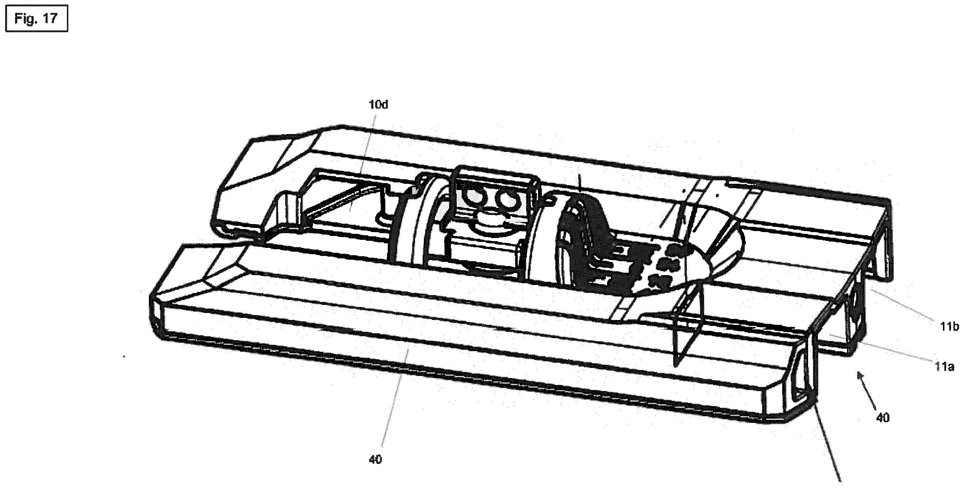

Wie in Figur 17 und 18 angedeutet enthält die Führungseinrichtung 4 einen ersten und zweiten Lüftungskanal 9a, 9b sowie einen ersten, zweiten, dritten und vierten Lüftungseinlass 10a, 10b, 10c, 10d. Über den ersten Lüftungskanal 9a ist der erste und zweite Lüftungseinlass 10a, 10b mit einem ersten Lüftungsauslass 11a strömungstechnisch verbunden. Über den zweiten Lüftungskanal 9b ist der dritte und vierte Lüftungseinlass 10c, 10d mit einem zweiten Lüftungsauslass 11b strömungstechnisch verbunden. Über die vier Lüftungseinlässe 10a, 10b, 10c, 10d kann Staub und Schmutzpartikel, die während des Arbeitens mit der Werkzeugmaschine 1 entstehen, in jeweils den ersten und zweiten Lüftungskanal 9a, 9b eintreten. Aus dem ersten und zweiten Lüftungsauslass 11a, 11b können der Staub und die Schmutzpartikel wieder aus den beiden Lüftungskanälen 9a, 9b und folglich aus der Führungseinrichtung 4 austreten. In den Figuren 4 und 5 sind die Lüftungskanäle 9a, 9b angedeutet. Die Enden des Lüftungskanäle 9a, 9b bilden eine Führungseinrichtungsschnittstelle 40, mit der die Führungseinrichtung 4 mit der Staubsaugvorrichtung 6 verbunden werden kann.

In dem Gehäuse 2 der Werkzeugmaschine 1 ist ein Antrieb 12 enthalten. Der Antrieb 12 ist dabei als bürstenloser Elektromotor ausgestaltet. Alternativ kann der Antrieb 12 auch als Bürstenmotor ausgestaltet sein. Der Antrieb 12 dient zum Antreiben der Werkzeugaufnahme 3 und wird durch den Betätigungsschalter 8 aktiviert oder deaktiviert. Die Werkzeugaufnahme 3 dient wiederum zum Aufnehmen und Halten eines Werkzeuges 13. In dem vorliegenden Ausführungsbeispiel ist das Werkzeug 13 in Form eines Sägeblatts ausgestaltet. Wie in Figur 1a und 1b angedeutet, erstreckt sich das als Sägeblatt ausgestaltete Werkzeug 13 durch die Führungseinrichtung 4.

Die elektrische Energieversorgung 5 dient zur Versorgung des Antriebs 12 mit einer elektrischen Energie. Der Antrieb 12 treibt wiederum die Werkzeugaufnahme 3 und folglich das Werkzeug 13 an. Mit Hilfe des Werkzeugs 13 kann ein Werkstoff bearbeitet, z.B. zerspannt, werden.

Des Weiteren ist in dem Gehäuse 2 der Werkzeugmaschine 1 eine Steuerungseinrichtung 14 enthalten, um die Versorgung des Antriebs 12 mit elektrischer Energie (Strom) zu regeln, zu steuern und zu überwachen. Wie nachfolgend noch im Detail beschrieben regelt, steuert und überwacht die Steuerungseinrichtung 14 noch weitere Funktionen, Bauteile oder Anbauteile.

Gemäß einer alternativen und in den Figuren nicht gezeigten Ausgestaltungsform der Werkzeugmaschine 1 kann die elektrische Energieversorgung 5 auch durch ein Netzkabel erfolgen. Das Netzkabel kann auch als Stromkabel bezeichnet werden, welches zur Versorgung der Werkzeugmaschine 1 mit elektrischer Energie mit einer Netzstromquelle (auch als Steckdose bezeichnet) verbunden werden kann.

Des Weiteren enthält die Werkzeugmaschine 1 eine Werkzeugmaschinenschnittstelle 15. Die Werkzeugmaschinenschnittstelle 15 ist, wie in den Figuren 1a, 1b, 4 und 5 angedeutet, an der Unterseite 2d des Gehäuses 2 der Werkzeugmaschine 1 positioniert. Die Werkzeugmaschinenschnittstelle 15 enthält dabei einen elektrischen Anschluss 16a mit einem Minus- sowie einem Pluspol. Über den elektrischen Anschluss 16a kann die elektrische Energieversorgung 5 der Werkzeugmaschine 1 kontaktiert und elektrischen Energie (d.h. elektrischer Strom) von der Energieversorgung 5 abgeleitet werden. Darüber hinaus enthält die Werkzeugmaschinenschnittstelle 15 eine mechanische Ankopplungsstelle 16b, die im Wesentlichen in Form einer Aussparung an der Unterseite 2d des Gehäuses 2 der Werkzeugmaschine 1 positioniert ist. Die mechanische Ankopplungsstelle 16b ist dabei ein Bestandteil einer Schnappverbindung zwischen der Werkzeugmaschine 1 und der Staubsaugvorrichtung 6. Wie nachfolgend noch im Detail beschrieben, dient die Werkzeugmaschinenschnittstelle 15 zur elektrischen und mechanischen Verbindung der Werkzeugmaschine 1 mit der Staubsaugvorrichtung 6. Über den elektrischen Anschluss 16a kann elektrische Energie von der Werkzeugmaschine 1 zu der Staubsaugvorrichtung 6 geleitet werden. Die mechanische Ankopplungsstelle 16b dient zur wiederlösbaren mechanischen Verbindung zwischen der Werkzeugmaschine 1 und der Staubsaugvorrichtung 6.

Die Staubsaugvorrichtung 6 enthält im Wesentlichen ein Staubsauggehäuse 20 zur Aufnahme eines Antriebs 21, eines Filters 22, einer Steuerung 23, ein Lüftungsrad 24, ein Staubbehälter 25, eine erste Schnittstelle 50, eine zweite Schnittstelle 60 und einer Filteraufnahmeeinrichtung 26.

Der Antrieb 21 der Staubsaugvorrichtung 6 ist in Form eines elektrischen Motors ausgestaltet. Der Antrieb 21 der Staubsaugvorrichtung 6 dient zum Antreiben des Lüftungsrads 24. Wenn das Lüftungsrad 24 angetrieben ist, wird hierdurch ein Unterdruck in der Staubsaugvorrichtung 6 erzeugt. Mit Hilfe dieses Unterdrucks kann Staub und Schmutzpartikel in die Staubsaugvorrichtung 6 und insbesondere in den Staubbehälter 25 eingesaugt werden.

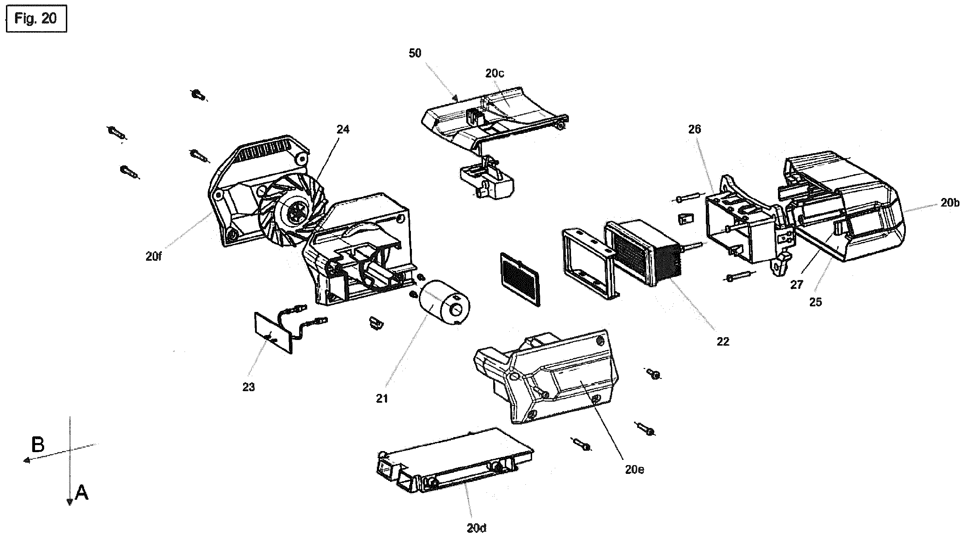

Das Staubsauggehäuse 20 enthält wiederum eine Vorderwand 20a, eine Rückwand 20b, einen Gehäusedeckel 20c, ein Gehäuseboden 20d, eine linke Seitenwand 20e und eine rechte Seitenwand 20f. Der Gehäusedeckel 20c kann dabei auch als Oberseite des Staubsauggehäuses 20 bezeichnet werden. Des Weiteren kann die Vorderwand 20a auch als Vorderseite des Staubsauggehäuses 20 bezeichnet werden. Wie in Figur 20 gezeigt, ist im Inneren des Staubsauggehäuses 20 in Pfeilrichtung B die Steuerung 23 vor dem Antrieb 21 positioniert. Der Antrieb 21 ist wiederum vor dem Filter 22 und der Filteraufnahmeeinrichtung 26 positioniert. Der Filter 22 und die Filteraufnahmeeinrichtung 26 sind ebenfalls in Pfeilrichtung B vor dem Staubbehälter 25 angeordnet. Der Staubbehälter 25 ist im Wesentlichen durch die linke Seitenwand 20e, die rechte Seitenwand 20f, die Rückwand 20b, den Gehäusedeckel 20c und den Gehäuseboden 20d gebildet und dient zum Aufnehmen bzw. Aufbewahren von angesaugten Staub- und Schmutzpartikeln. Der hintere Anteil des Staubsauggehäuses 20 bildet den Staubbehälter 25 ist über eine Schnappverbindung 27 mit dem restlichen Anteil des Staubsauggehäuses 20 so verbunden, dass der Staubbehälter 25 zum Entleeren schnell und einfach von der Staubsaugvorrichtung 6 entfernt und wieder verbunden werden kann.

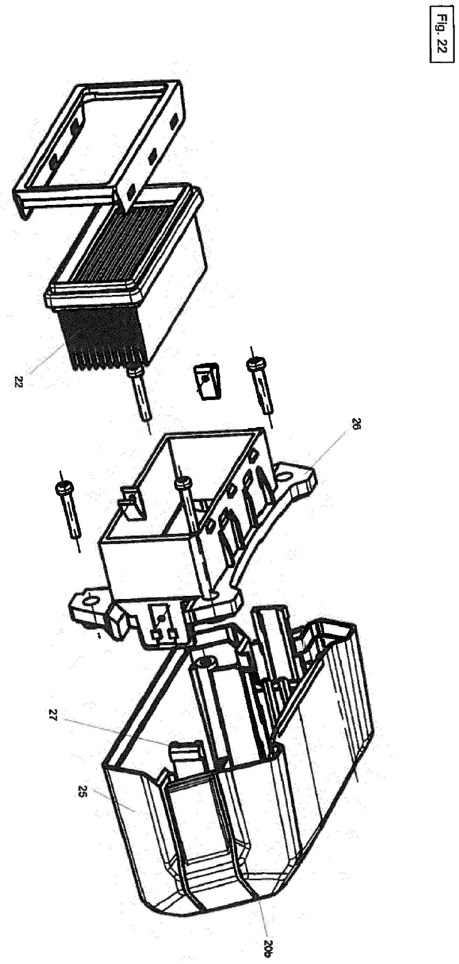

Die Filteraufnahmeeinrichtung 26 dient zum Aufnehmen und Halten des Filters 22. Der Filter 22 dient wiederum zum Herausfiltern von Staub bzw. Schmutzpartikeln und somit zum Schutz des Antriebs. Wenn der hintere Anteil des Staubsauggehäuses 20, der den Staubbehälter 25 bildet, abgenommen ist, kann der Filter 22 aus dem Inneren des Staubsauggehäuses 20 entnommen werden, vgl. Figur 22. Die Entnahme dient beispielsweise der Reinigung oder des Wechsels des Filters 22.

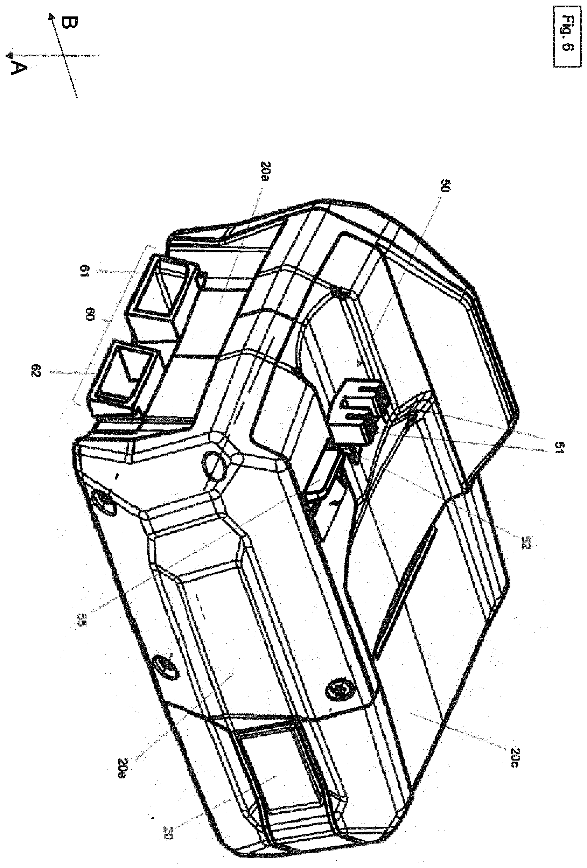

Wie insbesondere in Figur 6 gezeigt, ist an dem Gehäusedeckel 20c der Staubsaugvorrichtung 6 eine erste Schnittstelle 50 positioniert. Die erste Schnittstelle 50 kann mit der Werkzeugmaschinenschnittstelle 15 verbunden werden, vgl. Figur 4 und 5. Die erste Schnittstelle 50 enthält dabei eine elektrische Kontaktierung 51 sowie eine mechanische Kopplung 52.

Die elektrische Kontaktierung 51 ist dabei in Form eines Minus- und Plusstecker für eine Gleichspannungsquelle ausgestaltet.

Die mechanische Kopplung 52 ist in Form eines Hakens ausgestaltet und ebenfalls Bestandteil einer Schnappverbindung zwischen der Werkzeugmaschine 1 und der Staubsaugvorrichtung 6. Die als Haken ausgestaltete mechanische Kopplung 52 der Staubsaugvorrichtung 6 kann in die als Aussparung ausgestaltete mechanische Ankopplungsstelle 16b an der Unterseite 2d des Gehäuses 2 der Werkzeugmaschine 1 eingeführt werden. Die Aussparung weist dabei an dem Gehäuse 2 der Werkzeugmaschine 1 einen Hinterschnitt auf, sodass die als Haken ausgestaltete mechanische Kopplung 52 eine formschlüssige Verbindung mit der mechanischen Ankopplungsstelle 16b eingehen kann.

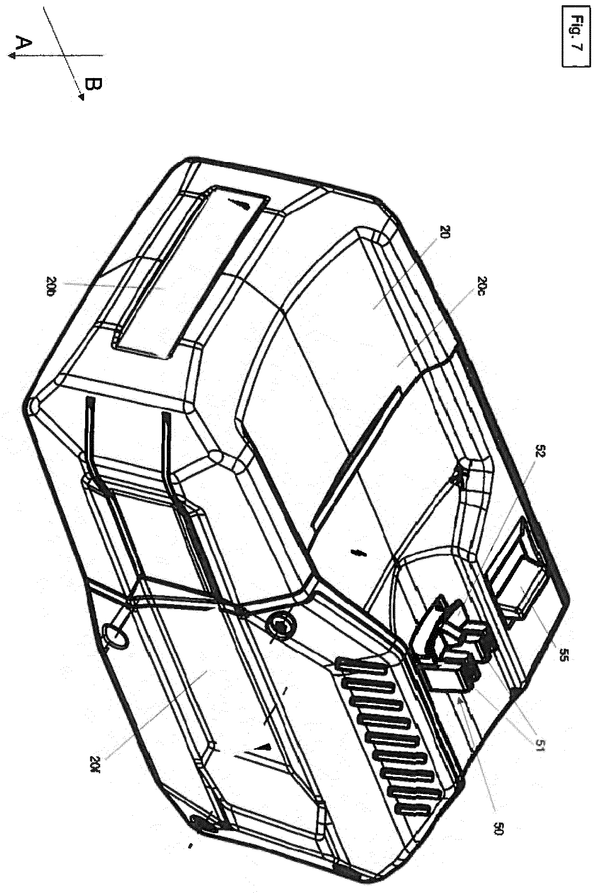

Wie in den Figuren 6 und 7 gezeigt, ist an dem Gehäusedeckel 20c der Staubsaugvorrichtung 6 ein Entriegelungsschalter 55 vorgesehen zum Entriegeln bzw. Lösen der mechanischen, formschlüssigen Verbindung zwischen der mechanischen Kopplung 52 ersten Schnittstelle 50 der Staubsaugvorrichtung 6 und der mechanischen Ankopplungsstelle 16b der Werkzeugmaschinenschnittstelle 15. Der Entriegelungsschalter 55 ist mechanisch mit der als Haken ausgestalteten mechanischen Kopplung 52 so verbunden, dass eine Bewegung des Entriegelungsschalters 55 entgegen der Pfeilrichtung B den Haken in Pfeilrichtung B bewegen lässt. Dadurch, dass der Haken in Pfeilrichtung B bewegt wird, kann die formschlüssige Verbindung zwischen der als Haken ausgestalteten mechanischen Kopplung 52 und der als Aussparung ausgestalteten mechanischen Ankopplungsstelle 16b aufgehoben werden. Die Staubsaugvorrichtung 6 kann anschließend von der Unterseite 2d der Werkzeugmaschine 1 entfernt werden.

Zur Verbindung der elektrischen Kontaktierung 51 der ersten Schnittstelle 50 der Staubsaugvorrichtung 6 mit dem elektrischen Anschluss 16a der Werkzeugmaschinenschnittstelle 15, wird der Minus- und Plusstecker der elektrischen Kontaktierung 51 entsprechend mit dem Minus- und Pluspol des elektrischen Anschlusses 16a verbunden. Entgegen der Pfeilrichtung A wird der Minusstecker dabei in den Minuspol und der Plusstecker wird in den Pluspol gesteckt. Über die Steckverbindung kann elektrische Energie (d.h. elektrischer Strom) von der als Akkumulator ausgestalteten elektrischen Energieversorgung 5 zu der Staubsaugvorrichtung 6 geleitet werden. Die elektrische Energie dient zum Betreiben des Antriebs 21, welcher wiederum das Lüftungsrad 24 zum Erzeugen eines Unterdrucks im Inneren der Staubsaugvorrichtung 6 antreibt.

Die Steuerung 23 der Staubsaugvorrichtung 6 dient zum Steuern und Regeln der Funktionen und Arbeitsabläufe der Staubsaugvorrichtung 6. Dabei wird insbesondere die Aufnahme von elektrischer Energie, d.h. elektrischer Strom, über die erste Schnittstelle 50 geregelt, gesteuert und überwacht.

Darüber hinaus sorgt die Steuerung 23 der Staubsaugvorrichtung 6 dafür, dass eine sowohl der Elektromotor 12 der Werkzeugmaschine 1 als auch das Lüftungsrad 24 der Staubsaugvorrichtung 6 mit einer konstanten Drehzahl betrieben werden. Hierzu wird von der Steuerung 23 der Staubsaugvorrichtung 6 die Spannungsversorgung zum Elektromotor 12 der Werkzeugmaschine 1 sowie zum Lüftungsrad 24 der Staubsaugvorrichtung 6 konstant gehalten. Anderenfalls würde bei einem vollständig geladenen Akkumulator die Drehzahl für das Lüftungsrad 24 der Staubsaugvorrichtung 6 zu hoch und bei einem fast leeren Akkumulator die Drehzahl für das Lüftungsrad 24 der Staubsaugvorrichtung 6 zu niedrig sein.

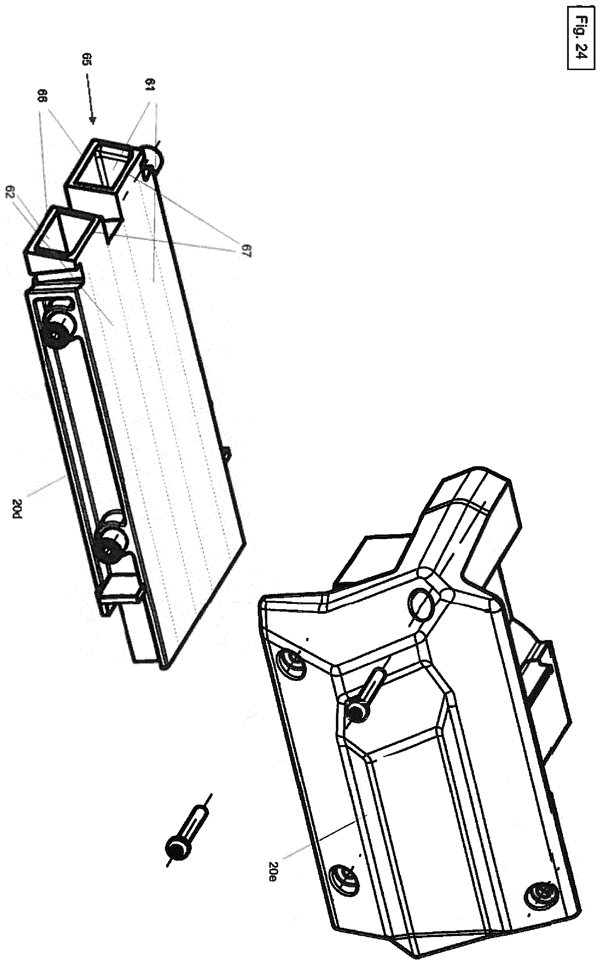

Wie insbesondere in Figur 20 und 24 gezeigt, ist an dem vorderen Ende des Gehäusebodens 20d der Staubsaugvorrichtung 6 eine zweite Schnittstelle 60 positioniert. Der Gehäuseboden 20d enthält zwei Strömungskanäle 61, 62, durch die vom Lüftungsrad 24 angesaugte Luft von der zweiten Schnittstelle 60 bis zu dem Staubbehälter 25 strömen kann. Wenigstens einer der Strömungskanäle 61, 62 ist in den Figuren 4 und 5 gezeigt.

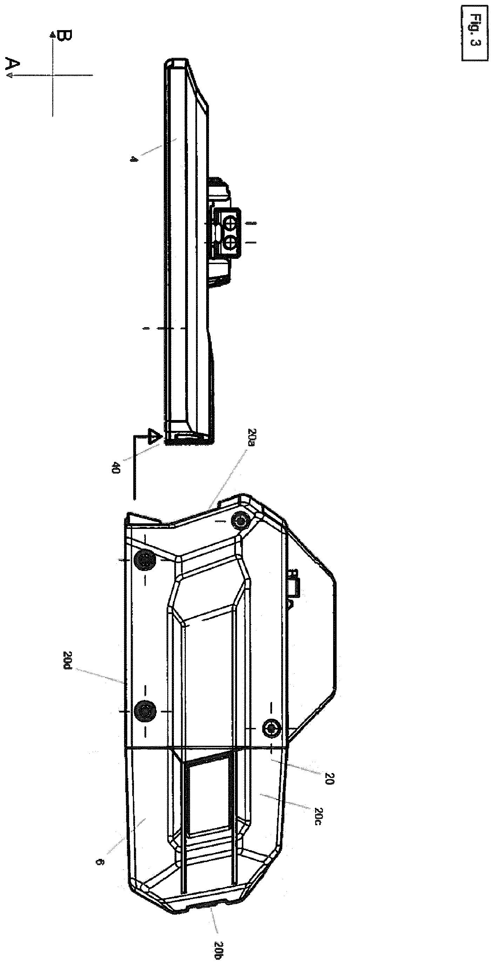

Die zweite Schnittstelle 60 dient zum wiederlösbaren Verbinden der Staubsaugvorrichtung 6 mit der Führungseinrichtungsschnittstelle 40 der Führungseinrichtung 4 sowie zum Einströmen der angesaugten Luft in die Staubsaugvorrichtung 6. Die zweite Schnittstelle 60 ist dabei so ausgestaltet, dass die Stirnseite 65 in einer geneigten Ebene verläuft. Die Ebene ist dabei so geneigt, dass die untere Seitenkante 66 der Stirnseite 65 der zweiten Schnittstelle 60 in Pfeilrichtung B vor der oberen Seitenkante 67 der Stirnseite 65 der zweiten Schnittstelle 60 positioniert ist, vgl. Figur 6. Durch diese spezielle Ausformung kann die zweite Schnittstelle 60 von unten entgegen der Pfeilrichtung A an die Führungseinrichtungsschnittstelle 40 und insbesondere mit dem ersten sowie zweiten Lüftungsauslass 11a, 11b verbunden werden. Die zweite Schnittstelle 60 der Staubsaugvorrichtung 6 verbindet somit strömungstechnisch die zwei Lüftungskanäle 9a, 9b der Führungseinrichtung 4 mit den zwei Strömungskanälen 61, 62 der Staubsaugvorrichtung 6, sodass im Betrieb der Staubsaugvorrichtung 6 Luft mit Staub und Schmutzpartikeln durch die vier Lüftungseinlässe 10a, 10b, 10c, 10d in die Führungseinrichtung 4 eingesaugt, entlang den Lüftungskanälen 9a, 9b, über die zweite Schnittstelle 60, in die Strömungskanäle 61, 62 und in den Staubbehälter 25 strömen kann. Wie in Figur 3 angedeutet, wird die zweite Schnittstelle 60 von unten an die Führungseinrichtungsschnittstelle 40 geschoben.

Die Werkzeugmaschine 1 kann dabei so gestaltet sein, dass bei der Betätigung des Betätigungsschalters 8 zunächst die Staubsaugvorrichtung 6 aktiviert und Luft angesaugt wird. Erst nachdem die Staubsaugvorrichtung 6 aktiviert ist, wird der Antrieb 12 der Werkzeugmaschine 1 und damit das Werkzeug 13 aktiviert.

## Patentansprüche

1. Staubsaugvorrichtung (6) verbindbar mit einer Werkzeugmaschine (1), insbesondere einer Stichsäge, wobei die Werkzeugmaschine (1) eine Werkzeugmaschinenschnittstelle (15), eine elektrische Energieversorgung (5), beispielsweise ein Akkumulator, sowie eine Führungseinrichtung (4) mit einer Führungseinrichtungsschnittstelle (40) und wenigstens einen Lüftungskanal (9a, 9b) enthält,
**dadurch gekennzeichnet, dass** die Staubsaugvorrichtung (6) eine erste und zweite Schnittstelle (50, 60) sowie einen Antrieb (21) zum Betreiben der Staubsaugvorrichtung (6) enthält, wobei die erste Schnittstelle (50) so mit der Werkzeugmaschinenschnittstelle (15) wiederlösbar verbindbar ist, dass der Antrieb (21) mit elektrischer Energie aus der elektrische Energieversorgung (5) versorgt ist, und wobei die zweite Schnittstelle (60) so mit der Führungseinrichtungsschnittstelle (40) verbindbar ist, dass die Staubsaugvorrichtung (6) mit dem wenigstens einen Lüftungskanal (9a, 9b) verbunden ist.

2. Staubsaugvorrichtung (6) nach Anspruch 1,
**dadurch gekennzeichnet, dass** die erste Schnittstelle (50) an einem Gehäusedeckel (20c) der Staubsaugvorrichtung (6) und die zweite Schnittstelle (60) an einer Vorderwand (20a) der Staubsaugvorrichtung (6) positioniert ist.

3. Staubsaugvorrichtung (6) nach Anspruch 1 oder 2,
**dadurch gekennzeichnet, dass** die erste Schnittstelle (50) der Staubsaugvorrichtung (6) sowohl eine elektrische Kontaktierung (51) als auch eine mechanische Kopplung (52) enthält.

4. Werkzeugmaschine (1), insbesondere einer Stichsäge, zur wiederlösbaren Verbindung mit einer Staubsaugvorrichtung (6), wobei die Werkzeugmaschine (1) eine Werkzeugmaschinenschnittstelle (15), eine elektrische Energieversorgung (5), beispielsweise ein Akkumulator, sowie eine Führungseinrichtung (4) mit einer Führungseinrichtungsschnittstelle (40) und wenigstens einen Lüftungskanal (9a, 9b) enthält,
**dadurch gekennzeichnet, dass** die Werkzeugmaschinenschnittstelle (15) mit einer ersten Schnittstelle (50) der Staubsaugvorrichtung (6) zur Übertragung einer elektrischen Energie von der elektrischen Energieversorgung (5) zu einem Antrieb (21) der Staubsaugvorrichtung (6) verbindbar ist und dass die Führungseinrichtungsschnittstelle (40) mit einer zweiten Schnittstelle (60) der Staubsaugvorrichtung (6) zur Anbindung der Staubsaugvorrichtung (6) mit dem wenigstens einen Lüftungskanal (9a, 9b) verbindbar ist.
